# EUROPEAN PATENT SPECIFICATION

(11) **EP 2 567 861 B1**
(45) Date of publication and mention of the grant of the patent: **15.11.2017**
(21) Application number: 11828501.4
(22) Date of filing: 22.03.2011
(51) Int. Cl.: B60N 2/44, B60N 2/16, B60N 2/02

(54) **VEHICLE SEAT**
FAHRZEUGSITZ
SIÈGE DE VÉHICULE

(30) Priority: 01.10.2010 JP 2010223894
(43) Date of publication of application: 13.03.2013
(73) Proprietor: Toyota Shatai Kabushiki Kaisha, Kariya-shi Aichi 448-0002 (JP)
(72) Inventor: KURETAKE Hiroyuki, Kariya-shi Aichi 448-0002 (JP)
(74) Representative: Dempster, Benjamin John Naftel
(86) International application number: PCT/JP2011/056740
(87) International publication number: WO 2012/042939

(56) References cited:
- GB-A- 2 081 082
- JP-A- 7 163 439
- JP-A- 11 301 321
- JP-A- 2003 327 023
- JP-A- 2006 015 116
- JP-A- 2006 015 116
- JP-U- H0 489 048

## Description

### TECHNICAL FIELD

The present invention relates to a vehicle seat that is disposed in a vehicle such as an automobile. In particular, the present invention relates to a vehicle seat in which a seat cushion can be lifted up when an occupant gets in and out of a vehicle.

### BACKGROUND ART

A vehicle seat on which an occupant sits is disposed on a vehicle floor of an automobile. The vehicle seat has a seat cushion on which the occupant sits down. Further, there exists a vehicle seat having a lifter mechanism that is capable of changing a height of a seat cushion on which an occupant sits. A vehicle seat disclosed in each of Patent Document 1 and Patent Document 2 described below has two pairs of links (front links and rear links) that are respectively laterally juxtaposed in front and rear positions of the seat cushion. In each of the front links and the rear links, similar to a common link structure, a proximal end thereof is rotatably connected to a base member disposed on the vehicle floor while a distal end thereof is rotatably connected to a cushion frame. Thus, the proximal end of each of the links is positioned on the base member, so as to function as a stationary end of which the longitudinal position and the height cannot be changed even when the links are rotated. To the contrary, the distal end of each of the links is positioned on the cushion frame, so as to function as a movable end of which the longitudinal position and the height can be changed when the links are rotated.

Further, the rear links are coupled to a drive mechanism which is configured to rotate the rear link with respect to the vehicle floor. Upon actuation of this drive mechanism, the rear links are rotated with respect to a stationary member disposed on the vehicle floor. Upon rotation of the rear links, the front links connected to the cushion frame are also concurrently rotated with respect to the stationary member disposed on the vehicle floor. Thus, a height of the seat cushion can be changed.

Further, the change in height of the seat cushion is performed in order to appropriately adjust a sitting posture of the occupant such that the sitting posture can conform to an occupant's body type. However, an amount of change of the height of the seat cushion taught by Patent Document 1 and Patent Document 2 is restricted to a small amount so as to correspond to an average difference in the occupant's body type.

GB-A-2081082 relates to a vehicle seat with a part supported by rotary linkages.

### PRIOR ART DOCUMENT

### PATENT DOCUMENT

Patent Document 1: Japanese Laid-Open Patent Publication No. 2003-327023
Patent Document 2: Japanese Laid-Open Patent Publication No. 2006-15116

### SUMMARY OF THE INVENTION

### PROBLEMS TO BE SOLVED BY THE INVENTION

The occupant may be an elderly person or other such person that has insufficient leg strength that is insufficient for getting out of the seat. Such an occupant cannot get up smoothly due to the insufficient leg strength when a posture of the occupant is changed from a sitting posture to a getting up posture. Thus, in order to allow such an occupant to easily get up from the seat cushion, there is a need for a structure in which a height in the getting up posture for getting up from the seat cushion can be previously changed so as to be increased.

On the other hand, the seat cushion described above is shaped so as to be inclined downwards and rearwards in order to retain the trunk of the occupant sitting thereon. In other words, a rear side of the seat cushion is configured to be inclined downwards such that a height of the buttocks of the occupant sitting on the vehicle seat is lower than a height of the knees of the occupant. Therefore, when the posture of the occupant is changed from the sitting posture to the getting up posture, an increased leg strength for getting up from the seat can be required because the buttocks are sunk down.

The present invention has been made in view of the problems described above. It is an object of the present invention to provide a vehicle seat in which a seat cushion can be lifted up when an occupant gets in and out of a vehicle and in which the seat cushion can be advantageously lifted up such that a relative height of the buttocks of the occupant to the knees of the occupant in a sitting posture of the occupant at that time can be greater than the relative height in the sitting posture of the occupant while the vehicle is moving.

### MEANS FOR SOLVING THE PROBLEMS

In order to solve the problems described above, a vehicle seat of the present teaching employs the following measures.

The present invention provides a vehicle seat in which a seat cushion can be lifted up when an occupant gets in and out of a vehicle, wherein positioned between a base member disposed on a vehicle floor and a cushion frame constituting a framework of the seat cushion are a front link and a rear link for lifting up the cushion frame, the front link and the rear link being respectively positioned in a front position and a rear position in a front-back positional relation in a relative positional relation with reference to an occupant sitting on the seat cushion, wherein proximal end side portions of the front link and the rear link are respectively formed as stationary end side shaft portions that are rotatably connected to the base member, wherein distal end side portions of the front link and the rear link are respectively formed as movable end side shaft portions that are rotatably connected to the cushion frame, wherein a distance from the stationary end side shaft portion to the movable end side shaft portion of the rear link as a driven link is set so as to be shorter than a distance from the stationary end side shaft portion to the movable end side shaft portion of the front link as a concurrently driven link, wherein a range in which the movable end side shaft portion of the front link can exist during rotation of the front link is set so as to be contained in a range positioned above a rotational center connection line (L) connecting the stationary end side shaft portions of the front link and the rear link, wherein a range in which the movable end side shaft portion of the rear link can exist during rotation of the rear link is set so as to be positioned over a range that straddles said rotational center connection line, wherein when the cushion frame is positioned in a lowermost position, the movable end side shaft portion of the front link is positioned in a lowermost position, the movable end side shaft portion of the front link is positioned above said rotational center connection line while the movable end side shaft portion of the rear link is positioned below the rotational center connection line, wherein only the movable end side shaft portion of the rear link can be raised while the movable end side shaft portion of the front link is not raised until a position of a movable end connection line (M) connecting the movable end side shaft portions is switched from a lower side position to an upper side position with respect to the stationary end side shaft portion of the rear link, and wherein only when the movable end connection line is positioned above the stationary end side shaft portion of the rear link, the movable end side shaft portions can be raised while rotated in the same direction in conjunction with each other.

According to the vehicle seat of the invention, when the front link and the rear link are respectively rotated about the stationary end side shaft portions as rotation axes, the movable end side shaft portions of the front link and the rear link can move in a vertical direction (a height direction).

A rotational range of the front link is set such that the movable end side shaft portion of the front link can always be positioned above the rotational center connection line. Conversely, a rotational range of the rear link is set such that the movable end side shaft portion of the rear link can be positioned over the range that straddles the rotational center connection line. As a result, the rotational range (a rotational angle) of the rear link may be an increased rotational range in comparison with the rotational range (a rotational angle) of the front link.

Further, because the movable end side shaft portions of the front link and the rear link are connected to the cushion frame, only when the movable end connection line is positioned above the stationary end side shaft portion of the rear link, the movable end side shaft portions can be rotated in the same direction in conjunction with each other. That is, the front link does not coordinately rotate with the rear link in the same direction as the rear link (e.g., coordinately rotates with the rear link downwards or opposite to a rotational direction of the rear link) until a position of the movable end connection line is switched from a lower side position to an upper side position with respect to the stationary end side shaft portion of the rear link, so as to be placed in a stand-by condition for coordinated rotation in the same direction as the rear link. Thus, only the movable end side shaft portion of the rear link can be raised while the movable end side shaft portion of the front link is not raised (e.g., is lowered) until the position of the movable end connection line is switched from the lower side position to the upper side position with respect to the stationary end side shaft portion of the rear link. As a result, a rising movement length of the movable end side shaft portion of the rear link due to the rotation of the rear link can be greater than a rising movement length of the movable end side shaft portion of the front link due to the rotation of the front link. That is, a rising length of a rear side of the seat cushion on which the buttocks of the occupant are positioned can be increased compared to a rising length of a front side of the seat cushion on which the knees of the occupant seated are positioned.

Further, a relative height difference between the movable end side shaft portion of the front link and the movable end side shaft portion of the rear link can be reduced until the stationary end side shaft portion of the rear link is positioned on the movable end connection line (until the position of the movable end connection line is switched from the lower side position to the upper side position with respect to the stationary end side shaft portion of the rear link). That is, when the cushion frame is lifted up, a rear side of the cushion frame can be raised in the early stages so as to eliminate sinking of the rear side of the seat cushion (sinking of the buttocks).

Thus, in the vehicle seat of the invention, the seat cushion can be advantageously lifted up at a getting in/out time of the occupant such that a relative height of the buttocks of the occupant to the knees of the occupant in a sitting posture of the occupant at that time can be greater than the relative height in a sitting posture of the occupant during traveling.

In a second embodiment of the vehicle seat of the invention, the rotational center connection line is set so as to be raised toward the front position in the front-back positional relation or inclined upwards and forwards.

According to the vehicle seat of this embodiment, the rotational center connection line is set so as to be raised toward the front position in the front-back positional relation or inclined upwards and forwards. Therefore, the movable end side shaft portion of the front link can be effectively prevented from being lowered beyond the rotational center connection line and prevented from being positioned below the rotational center connection line. That is, in a case in which the movable end side shaft portion of the front link is moved beyond the rotational center connection line and positioned below this connection line, the coordinated rotation of the front link and the rear link is prone to instability. However, according to the vehicle seat of this embodiment, the coordinated rotation of the front link and the rear link can be prevented from being destabilized. As a result, such coordinated rotation can be stabilized.

The vehicle seat of a third embodiment corresponds to the vehicle seat of the first or second embodiments, wherein the seat cushion has bank-shaped side support portions that are positioned on widthwise both sides of the seat cushion and that are respectively bulged upwards beyond a central portion of the seat cushion, and wherein at least a getting in/out side support portion in the side support portions that are positioned on the widthwise both sides of the seat cushion has a hold-down member, the hold-down member being configured to suppress an upwardly bulged portion of the getting in/out side support portion as the seat cushion is lifted up, so as to restrict lift-up movement of an upper surface of the getting in/out side support portion due to lift-up motion of the seat cushion.

According to the vehicle seat of the third embodiment, the hold-down member disposed on at least the getting in/out side support portion can function to suppress the upwardly bulged portion of the side support portion, so as to restrict the lift-up movement of the upper surface of the side support portion due to the lift-up motion of the seat cushion. As a result, even when the seat cushion is lifted up, a height of the upper surface of the side support portion can be prevented from being increased to a height corresponding to the lift-up motion. Accordingly, when the occupant sits on or gets out of the vehicle seat while the seat cushion is lifted up, the upwardly bulged portion of the side support portion can be reduced, so that the occupant can advantageously sit on or get out of the vehicle seat.

### EFFECTS OF THE INVENTION

In the vehicle seat according to the invention, the seat cushion can be advantageously lifted up at a getting in/out time of the occupant such that a relative height of the buttocks of the occupant to the knees of the occupant in a sitting posture of the occupant at that time can be greater than the relative height in a sitting posture of the occupant during traveling.

In the vehicle seat according to the second embodiment, instability in the coordinated rotation of the front link and the rear link can be minimized, so that the front link and the rear link can be stably rotated in conjunction with each other.

In the vehicle seat according to the third embodiment, even when the seat cushion is lifted up, the upwardly bulged portion of the side support portion can be reduced, so that the occupant can advantageously sit on or get out of the vehicle seat.

### BRIEF DESCRIPTION OF THE DRRAWINGS

FIG. 1 is a schematic side view which illustrates a lifting mechanism before a lifting up operation is performed.
FIG. 2 is a schematic side view which illustrates the lifting mechanism after the lifting up operation is performed.
FIG. 3 is a first schematic operational diagram which illustrates an operation of a front link and a rear link.
FIG. 4 is a second schematic operational diagram which illustrates the operation of the front link and the rear link.
FIG. 5 is a third schematic operational diagram which illustrates the operation of the front link and the rear link.
FIG. 6 is a fourth schematic operational diagram which illustrates the operation of the front link and the rear link.
FIG. 7 is a perspective view of a vehicle seat which illustrates an appearance thereof.
FIG. 8 is a sectional view of a seat cushion before the lifting up operation is performed.
FIG. 9 is a sectional view of the seat cushion after the lifting up operation is performed.

### MODE FOR CARRYING OUT THE INVENTION

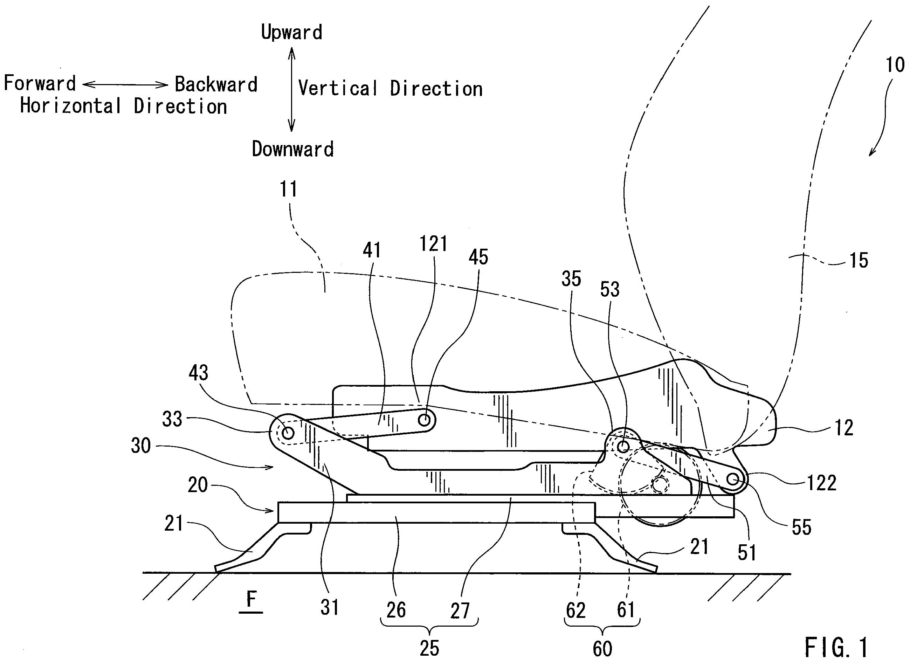

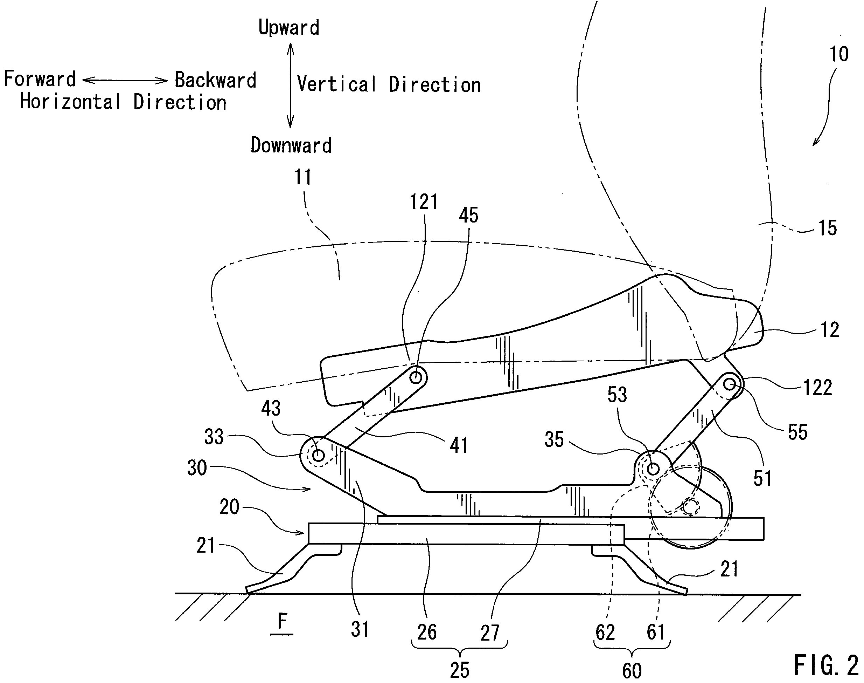

In the following, a vehicle seat according to an embodiment of the present invention will be described with reference to the drawings. FIG. 1 is a schematic side view which illustrates lifting mechanisms 30 before a lifting up operation is performed. FIG. 2 is a schematic side view which illustrates the lifting mechanisms 30 after the lifting up operation is performed. Each of FIGS. 1 and 2 schematically illustrates the lifting up operation of a seat cushion 11 of a vehicle seat 10, in particular, clearly illustrates a cushion frame 12 and the lifting mechanisms 30. Therefore, each of FIGS. 1 and 2 is focused on the cushion frame 12, the lifting mechanisms 30 and slide rail mechanisms 20 with the other components of the vehicle seat 10 being omitted. Further, in each of FIGS. 1 and 2, the left side corresponds to a front side of the vehicle seat 10, and the right side corresponds to a rear side of the vehicle seat 10. Further, in these drawings, an upper side corresponds to an upper side of the vehicle seat 10, and a lower side corresponds to a lower side of the vehicle seat 10. The front, rear, upper and lower sides of the vehicle seat 10 correspond to respective sides of an occupant sitting on the seat cushion 11. Thus, in the following description, a positional relation of the front, rear, upper and lower sides corresponds to a positional relation of front, rear, upper and lower sides in a relative positional relation with reference to the occupant sitting on the seat cushion 11.

The vehicle seat 10 shown in FIGS. 1 and 2 is a vehicle seat that is disposed in a vehicle such as an automobile. The vehicle seat is configured such that the occupant of the vehicle can sit thereon. The vehicle seat has the seat cushion 11 on which the occupant sits, and a seat back 15 which may function as a backrest when the occupant sits on the seat cushion 11. Although not shown in detail, the seat back 15 has an appropriate framework and is supported by a cushion frame 12 which constitutes a framework.

Further, the vehicle seat 10 is constructed such that the seat cushion 11 can be lifted up when the occupant gets in and out of the vehicle (i.e., at a getting in/out time of the occupant) in order to allow the occupant to easily get in and out of the vehicle even if the occupant has insufficient leg strength for getting up from the vehicle seat 10 on their own.

The cushion frame 12 constituting the framework of the seat cushion 11 is secured to a vehicle floor F via the slide rail mechanisms 20 and the lifting mechanisms 30.

As described hereinafter in detail, distal ends (movable end side shaft portions 45 and 55) of front links 41 and rear links 51 are rotatably connected to the cushion frame 12. Therefore, the cushion frame 12 has pivot connection portions 121 and 122 for rotatably connecting the movable end side shaft portions 45 of the front links 41 and the movable end side shaft portions 55 of the rear links 51.

The slide rail mechanisms 20 are disposed on the vehicle floor F. As shown in FIGS. 1 and 2, each of the slide rail mechanisms 20 has leg brackets 21 and 21 and a slide rail 25. The leg brackets 21 and 21 are secured to the vehicle floor F by appropriate fastening members, so that the slide rail 25 can be fixedly supported thereon. Thus, the leg brackets 21 and 21 are positioned in right and left pairs in each of front and rear portions of the slide rails 25.

The slide rail 25 has a lower rail 26 and an upper rail 27. The lower rail 26 is fixedly supported via the leg brackets 21 and 21. In particular, a lower portion of the lower rail 26 is secured to upper portions of the leg brackets 21 that are secured to the vehicle floor F. In this way, the lower rail 26 is secured to the vehicle floor F. The upper rail 27 is attached to this lower rail 26. The upper rail 27 is configured to slide with respect to the lower rail 26 in a longitudinal direction thereof. The upper rail 27 that is slidable relative to the lower rail 26 is configured to be secured to the lower rail 26 at an appropriate slide position. That is, the upper rail 27 thus secured can be secured to the vehicle floor F via the lower rail 26 and can fixedly supports a link support member 31 of each of the lifting mechanisms 30 which will be hereinafter described.

The lifting mechanisms 30 are positioned between the slide rail mechanisms 20 disposed on the vehicle floor F and the cushion frame 12. Thus, the cushion frame 12 is can be secured to the slide rail mechanisms 20 via the lifting mechanisms 30.

The lifting mechanisms 30 are intended to lift the cushion frame 12 upwards. Each of the lifting mechanisms 30 has the link support member 31, the front link 41, the rear link 51 and a drive mechanism 60.

The link support member 31 is a member that is fixedly supported by the upper rail 27 and supports the front link 41 and the rear link 51. In this embodiment, the link support member 31 corresponds to a base member of the present invention. The link support member 31 has a shaped that is longitudinally extended along the upper rail 27. Further, a lower portion of the link support member 31 is connected to an upper portion of the upper rail 27. Further, the link support member 31 has a front side pivot portion 33 and a rear side pivot portion 35 that are formed in a front position and a rear position thereof and are respectively configured to rotatably support the front link 41 and the rear link 51. The front side pivot portion 33 and the rear side pivot portion 35 project upwards so as to respectively rotatably support proximal ends of the front link 41 and the rear link 51 which will be hereinafter described.

Further, as will be described in detail below, with regard to the front side pivot portion 33 and the rear side pivot portion 35, the front side pivot portion 33 which rotatably supports the proximal end (a stationary end side shaft portion 43) of the front link 41 is configured to have a vertical position that is higher than a vertical position of the rear side pivot portion 35 which rotatably supports the proximal end (a stationary end side shaft portion 53) of the rear link 51. That is, as shown in the drawings, the front side pivot portion 33 rotatably supporting the proximal end of the front link 41 projects upwards further than the rear side pivot portion 35 rotatably supporting the proximal end of the rear link 51.

Next, the front link 41 and the rear link 51 will be described.

The front link 41 and the rear link 51 are formed as a so-called four-bar link mechanism. In particular, the front link 41 and the rear link 51 are respectively formed as substantially elongated plate-shaped members. Further, the rear link 51 is substantially formed as the elongated plate-shaped member having a length smaller than a length of the front link 41. That is, a radius of rotation (a distance from the stationary end side shaft portion 53 to the movable end side shaft portion 55) of the rear link 51 is set so as to be shorter than a radius of rotation (a distance from the stationary end side shaft portion 43 to the movable end side shaft portion 45) of the front link 41.

Further, in the substantially elongated plate-shaped front link 41, the proximal end thereof is formed as the stationary end side shaft portion 43 that is rotatably connected to the front side pivot portion 33 of the link support member 31, and the distal end thereof is formed as the movable end side shaft portion 45 that is rotatably connected to the pivot connection portion 121 of the cushion frame 12. Also, in the substantially elongated plate-shaped rear link 51, the proximal end thereof is formed as the stationary end side shaft portion 53 that is rotatably connected to the rear side pivot portion 35 of the link support member 31, and the distal end thereof is formed as the movable end side shaft portion 55 that is rotatably connected to the pivot connection portion 122 of the cushion frame 12. Further, rotatable connection of each of the stationary end side shaft portions 43 and 53 and the movable end side shaft portions 45 and 55 can be performed via an appropriate pin connection mechanism. Further, the rear link 51 is integrally connected to a driven gear 62 of the drive mechanism 60 which will be hereinafter described.

The drive mechanism 60 may function to rotate the front link 41 and the rear link 51, thereby lifting up or lifting down the cushion frame 12. The drive mechanism 60 is arranged so as to drive the rear link 51. The drive mechanism 60 has a drive motor (not shown), a reduction gear 61 that is configured to reduce a driving force of the drive motor, and the driven gear 62 that is in mesh with the reduction gear 61 such that the reduced driving force can be transmitted thereto. Further, the driven gear 62 is arranged integrally with the rear link 51 such that gear teeth formed therein can be positioned along a rotational direction of the rear link 51.

Thus, when the occupant operates the drive mechanism 60, the drive motor (not shown) is rotationally driven, so that the reduction gear 61 can be rotationally driven. As a result, the reduction gear 61 can drive the driven gear 62 meshed therewith, so as to rotate the rear link 51 that is integrated with the driven gear 62. Further, when the rear link 51 is rotated (driven), the front link 41 can be rotated (concurrently driven) via the cushion frame 12. Upon rotation of the front link 41 and the rear link 51, the cushion frame 12 can be moved toward and away from the vehicle floor F. Thus, a vertical position of the seat cushion 11 can be changed.

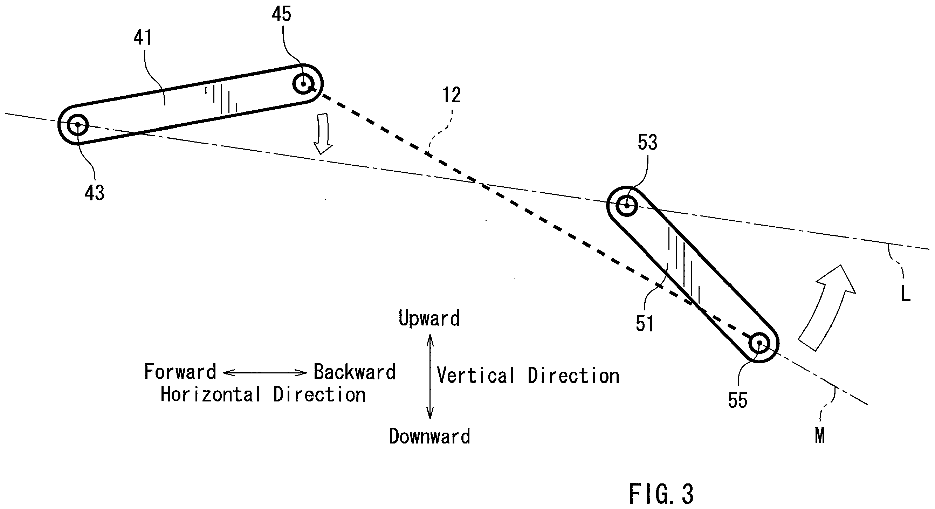

Next, arrangement positions of the front link 41 and the rear link 51 will be described with reference to operational diagrams of FIGS. 3 to 6.

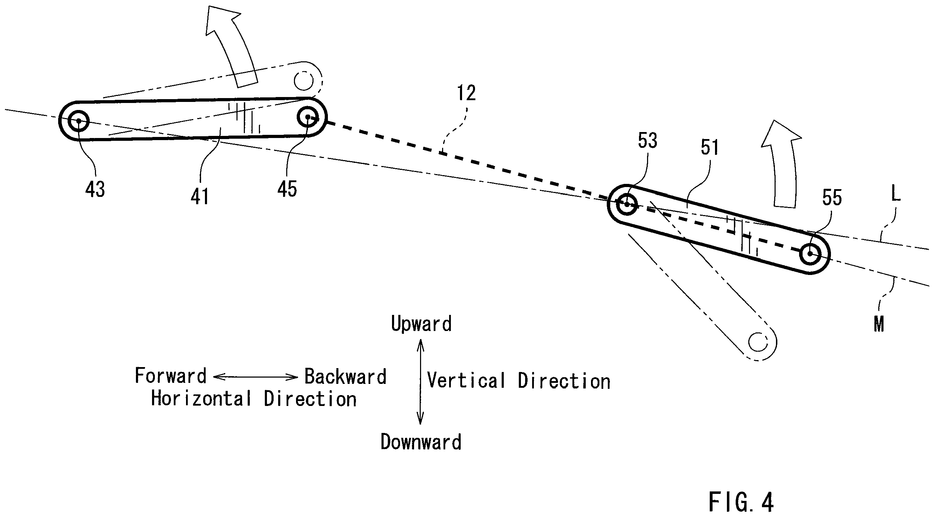

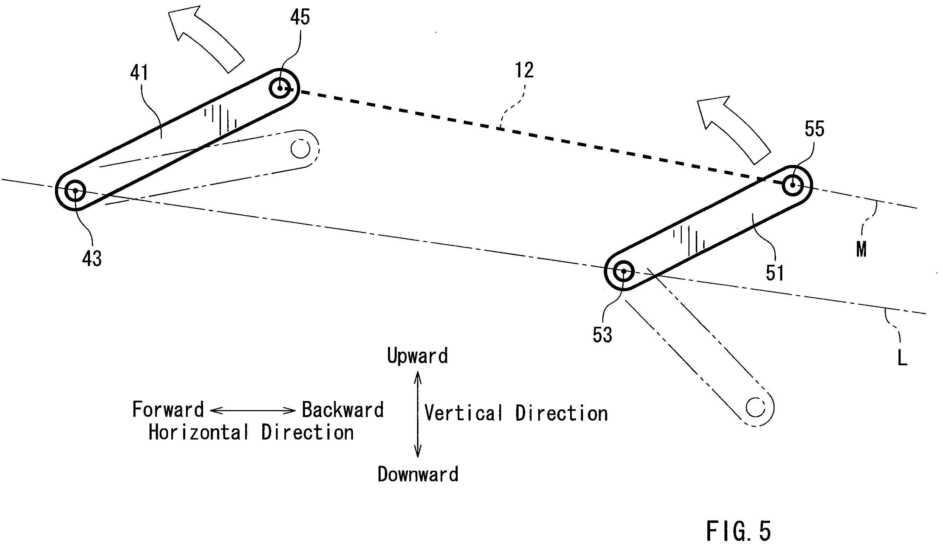

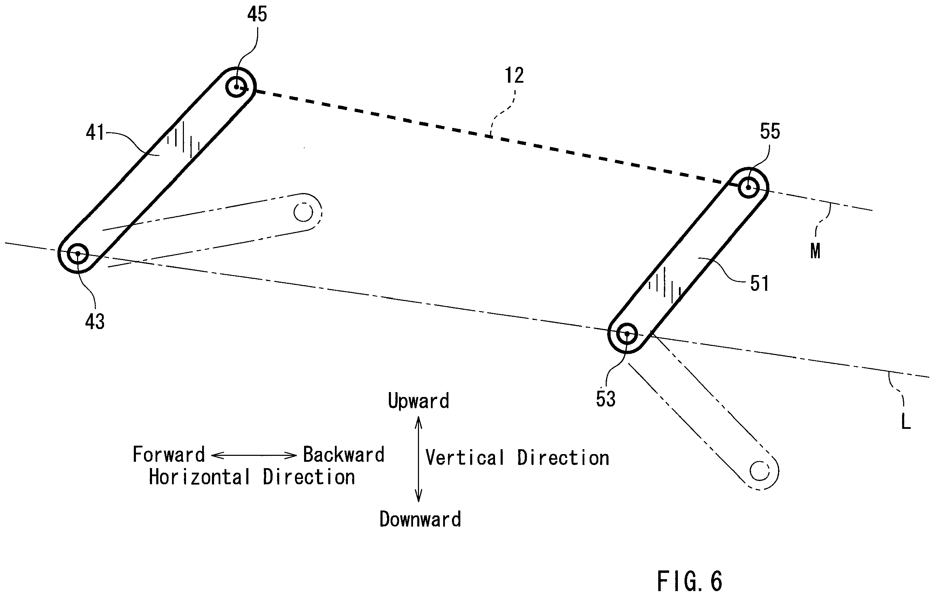

Each of FIGS. 3 to 6 schematically illustrates operations of the front link 41 and the rear link 51 constituting each of the lifting mechanisms 30. FIG. 3, FIG. 4, FIG. 5 and FIG. 6 are respectively a first schematic operational diagram, a second schematic operational diagram, a third schematic operational diagram and a fourth schematic operational diagram. Thus, each of the lifting mechanisms 30 can lift up the cushion frame 12 in the order of FIGS. 3, 4, 5 and 6. Conversely, each of the lifting mechanisms 30 can lower the cushion frame 12 in the order of FIGS. 6, 5, 4, and 3. That is, FIG. 3 shows a condition in which the cushion frame 12 is positioned in a lowermost position, which corresponds to a condition in which the vehicle seat 10 as a whole is in a position shown in FIG. 1. Conversely, FIG. 6 shows a condition in which the cushion frame 12 is positioned in an uppermost position, which corresponds to a condition in which the vehicle seat 10 as a whole is in a position shown in FIG. 2. Further, FIGS. 4 and 5 shows a condition in which the cushion frame 12 is positioned in an intermediate position.

Further, a symbol L described in FIGS. 3 to 6 indicates a line connecting the stationary end side shaft portions 43 and 53 of the front link 41 and the rear link 51. The line connecting the stationary end side shaft portions 43 and 53 will be referred to as a rotational center connection line L. Further, a symbol M described in FIGS. 3 to 6 indicates a line connecting the movable end side shaft portions 45 and 55 of the front link 41 and the rear link 51. The line connecting the movable end side shaft portions 45 and 55 will be referred to as a movable end connection line M. Further, in FIGS. 3 to 6, the cushion frame mentioned above shown by the numeral 12 is schematically shown, and the movable end side shaft portions 45 and 55 of the front link 41 and the rear link 51 are rotatably connected to the cushion frame 12. That is, the movable end side shaft portion 55 of the rear link 51 is capable of rotating in conjunction with the movable end side shaft portion 45 of the front link 41 via the cushion frame 12.

Further, as shown in FIGS. 3 to 6, the rotational center connection line L is set so as to be raised forwards (toward a front position) or inclined upwards and forwards. In particular, as described above, a vertical position of the stationary end side shaft portion 43 of the front link 41 is positioned in an upper position that is higher than a vertical position of the stationary end side shaft portion 53 of the rear link 51.

Further, as shown in FIGS. 3 to 6, a range in which the movable end side shaft portion 45 of the front link 41 can exist during rotation of the front link 41 is set so as to be contained in a range positioned above the rotational center connection line L. Conversely, a range in which the movable end side shaft portion 55 of the rear link 51 can exist during rotation of the rear link 51 is set so as to be positioned over a range that straddles the rotational center connection line L. That is, when each of the lifting mechanisms 30 lifts up the cushion frame 12 from the lowermost position to the uppermost position, the movable end side shaft portions 45 and 55 of the front link 41 and the rear link 51 may move in a manner shown in FIGS. 3 to 6. In particular, as shown in FIGS. 3 to 6, the movable end side shaft portion 45 of the front link 41 moves over the range positioned above the rotational center connection line L. Conversely, as shown in FIGS. 3 to 6, the movable end side shaft portion 55 of the rear link 51 moves over the range that straddles the rotational center connection line L.

More particularly, as shown in FIGS. 3 and 1, when the cushion frame 12 is positioned in the lowermost position, the movable end side shaft portion 45 of the front link 41 is positioned above the rotational center connection line L. Conversely, the movable end side shaft portion 55 of the rear link 51 is positioned below the rotational center connection line L. However, to the contrary, when the cushion frame 12 is positioned in the uppermost position as shown in FIGS. 6 and 2, both of the movable end side shaft portions 45 and 55 of the front link 41 and the rear link 51 are positioned above the rotational center connection line L.

The lifting mechanism 30 thus constructed rotates the rear link 51 by the drive mechanism 60 described above and at the same time, rotates the front link 41 in conjunction therewith, so as to lift up the cushion frame 12. Lifting-up motion of the cushion frame 12 can be progressed in the order of FIGS. 3, 4, 5 and 6.

That is, when the cushion frame 12 is positioned in the lowermost position as shown in FIG. 3, the movable end side shaft portion 45 of the front link 41 is positioned above the rotational center connection line L while the movable end side shaft portion 55 of the rear link 51 is positioned below the rotational center connection line L. Further, when the rear link 51 is rotated (driven) by actuation of the drive mechanism 60, the lifting mechanism 30 can be changed from a condition shown in FIG. 3 to a condition shown in FIG. 4. That is, when the rear link 51 rotates such that the movable end side shaft portion 55 of the rear link 51 moves upwards, as shown in FIG. 4, the movable end side shaft portion 55 can move gradually toward the rotational center connection line L. To the contrary, as shown in FIG. 4, the front link 41 rotates such that the movable end side shaft portion 45 moves downwards. As a result, the movable end connection line M connecting the movable end side shaft portions 45 and 55 is gradually raised. The movable end connection line M can then be positioned on the stationary end side shaft portion 53 of the rear link 51 as shown in FIG. 4. That is, a relative height difference between the movable end side shaft portion 45 of the front link 41 and the movable end side shaft portion 55 of the rear link 51 can be reduced until the stationary end side shaft portion 53 of the rear link 51 is positioned on the movable end connection line M (until a position of the movable end connection line M is switched from a lower side position to an upper side position with respect to the stationary end side shaft portion 53 of the rear link 51).

When the rear link 51 is further rotated (driven) by activation of the drive mechanism 60, the lifting mechanism 30 can be changed from the condition shown in FIG. 4 to a condition shown in FIG. 5. At this time, the rear link 51 can be rotated (driven) while the movable end connection line M is positioned above the stationary end side shaft portion 53 of the rear link 51. Therefore, the front link 41 can rotate in the same direction as the rear link 51 in conjunction therewith. That is, as shown in FIG. 5, when the rear link 51 rotates such that the movable end side shaft portion 55 of the rear link 51 can move upwards, the front link 41 can also rotates concurrently such that the movable end side shaft portion 45 thereof can move upwards. When the respective movable end side shaft portions 55 and 45 move upwards due to coordinated rotation of the rear link 51 and the front link 41, as shown in FIG. 6, the cushion frame 12 can be position in the uppermost position. Thus, a rising movement length of the movable end side shaft portion 55 of the rear link 51 can be greater than a rising movement length of the movable end side shaft portion 45 of the front link 41.

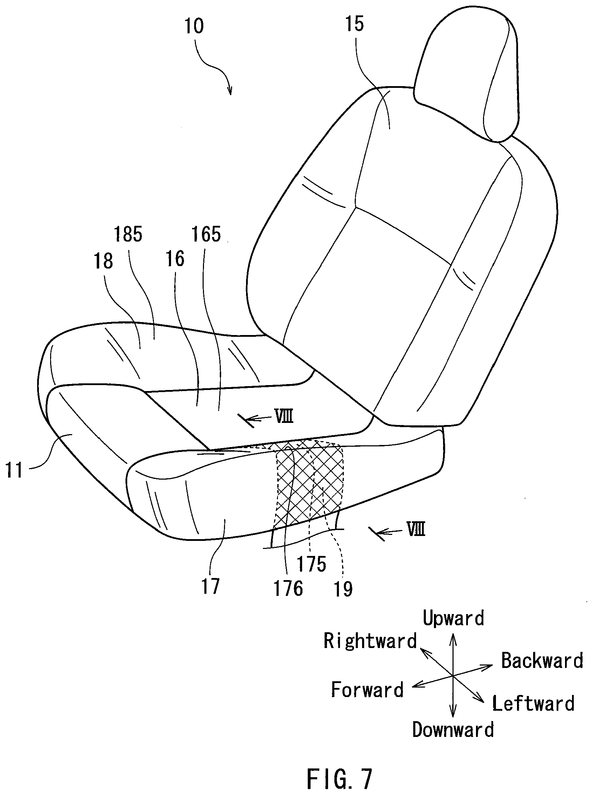

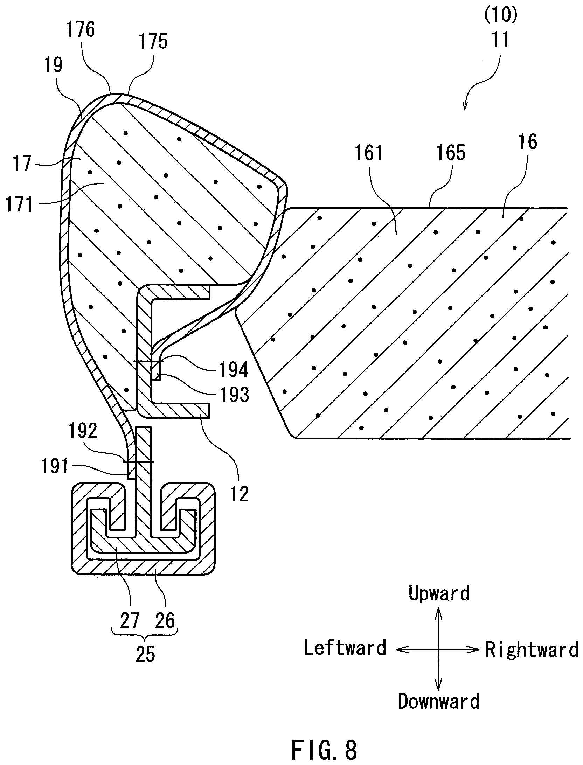

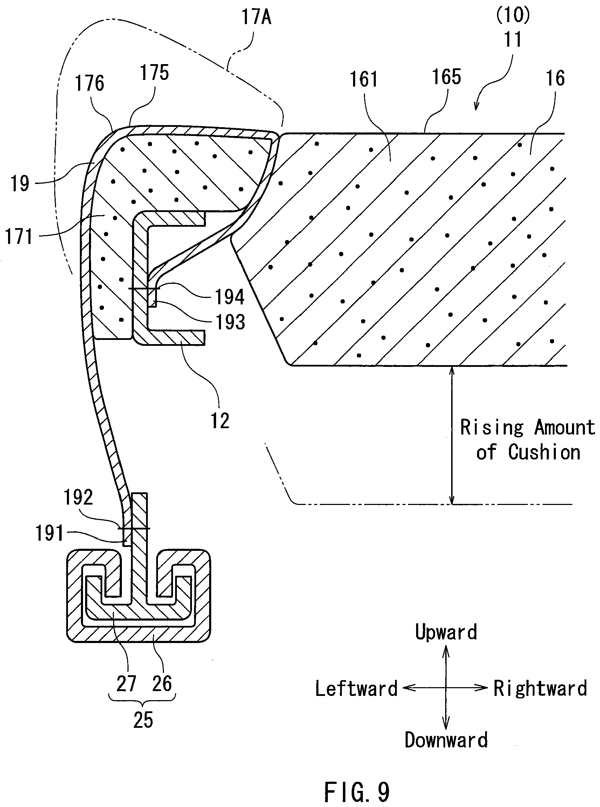

FIG. 7 is a perspective view of the vehicle seat which illustrates an appearance thereof and in which an appearance of the seat cushion 11 is also shown in perspective view. Each of FIGS. 8 and 9 is a sectional view of the seat cushion 11 which view corresponds to a sectional view taken along line VIII-VIII of FIG. 7. Further, FIG. 8 corresponds to a sectional view of the seat cushion 11 before the lifting up operation is performed. Conversely, FIG. 9 corresponds to a sectional view of the seat cushion 11 after the lifting up operation is performed.

As shown in FIG. 7, a central portion of the seat cushion 11 is set as a central sitting portion 16. The central sitting portion 16 may function as a portion on which the buttocks of the occupant are placed when the occupant sits on the seat cushion 11. Further, positioned on widthwise both sides of the central sitting portion 16 are side support portions 17 and 18 that are respectively bulged upwards beyond the central sitting portion 16. As shown in FIG. 8 and 9, the central sitting portion 16 and the side support portion 17 are formed by attaching cushion pads 161 and 171 to the cushion frame 12 or other members. Each of the cushion pads 161 and 171 is formed of urethane foam (resin form). Thus, each of the cushion pads 161 and 171 is configured so as to be capable of being elastically deformed when a predetermined pressure is applied thereto.

Further, as shown in FIG. 7, each of the side support portions 17 and 18 is formed as a bank-shaped member that is bulged upwards beyond the central sitting portion 16. In particular, upper surfaces 175 and 185 of the side support portions 17 and 18 are positioned above an upper surface 165 of the central sitting portion 16. The side support portions 17 and 18 thus formed can support a body load of the occupant sitting on the central sitting portion 16 in a lateral direction (a width direction of the seat) due to upwardly bulged portions thereof. Further, the vehicle seat 10 shown in FIG. 7 is the vehicle seat 10 that is used as a passenger seat. Therefore, in the side support portions 17 and 18 that are both sides of the seat cushion 11 in the lateral direction (the width direction of the seat), the side support portion 17 positioned on the left side is set as a getting in/out side support portion 17. To the contrary, the side support portion 18 positioned on the right side is set as a non-getting in/out side support portion 18 that faces a vehicle seat that is used as a driver's seat.

Further, the getting in/out side support portion 17 has a hold-down member 19. The hold-down member 19, when the seat cushion 11 is lifted up so as to be switched from FIG. 8 to FIG. 9, may function to restrict lift-up movement of the upper surface 175 of the side support portion 17 resulting from lift-up motion of the seat cushion 11. As shown in FIG. 7, the hold-down member 19 is formed as a strap-shaped belt member. The hold-down member 19 is configured so as to cover at least an uppermost surface 176 constituting an uppermost portion of the upper surface 175 of the side support portion 17. The hold-down member 19 extends in a longitudinal direction along the uppermost surface 176 of the side support portion 17. Further, the side support portion 17 is formed so as to provide an appropriately expanded region in the longitudinal direction of the vehicle seat 10.

The right and left side ends of this hold-down member 19 are secured in position as follows. That is, a strap-shaped outer end (a left end in the drawing) 191 of the hold-down member 19 is secured to the upper rail 27 of the slide rail 25 by bonding (as shown by numeral 192) while a strap-shaped inner end (a right end in the drawing) 193 is secured to the cushion frame 12 by bonding (as shown by numeral 194). The hold-down member 19 which is formed as the strap-shaped belt member may be made of fabrics that does not expand and contract. Thus, if both of the ends 191 and 193 are pulled in opposite directions, a length of the hold-down member 19 itself cannot substantially be changed.

Further, although not shown in FIGS. 8 and 9, similar to the cushion pad 161 of the central sitting portion 16, the cushion pad 171 of the side support portion 17 having the hold-down member 19 has a seat cover that covers the cushion pad 171 and the hold-down member 19.

When the seat cushion 11 is lifted up, the hold-down member 19 changes from a condition shown in FIG. 8 to a condition shown in FIG. 9. That is, when the seat cushion 11 is lifted up, the cushion frame 12 is raised relative to the slide rail 25 (the slide rail mechanism 20) due to the front link 41 and the rear link 51. At this time, the hold-down member 19 functions to suppress the upwardly bulged portion of the side support portion 17 as the seat cushion 11 is raised (lifted up). That is, the cushion frame 12 to which the inner end (the left end in the drawing) 193 of the hold-down member 19 is secured by bonding (as shown by numeral 194) can be raised (lifted up) while the upper rail 27 to which the outer end (the left end in the drawing) 191 is secured by bonding (as shown by numeral 192) is not lifted up. At this time, since the length of the hold-down member 19 itself cannot substantially be changed, the hold-down member 19 may act on the cushion pad 171 of the side support portion 17 so as to press the same downwards, thereby suppressing the upwardly bulged portion of the side support portion 17. That is, the side support portion 17 cannot rise as shown by broken line shown by numeral 17A in FIG. 9. Instead, the cushion pad 171 is pressed downwards so as to suppress the upwardly bulged portion of the side support portion 17. Further, the central sitting portion 16 of the seat cushion 11 on which the buttocks of the occupant are placed when the occupant sits on the seat can rise as the cushion frame 12 is raised (lifted up).

Thus, in the seat cushion 11 after the lifting-up operation is performed, which is shown in FIG. 9, as compared with the seat cushion 11 before the lifting-up operation is performed, which is shown in FIG. 8, a rising position of the side support portion 17 can be held down by the hold-down member 19 such that the upper surface 175 of the side support portion 17 can be flush with the upper surface 165 of the central sitting portion 16.

The vehicle seat 10 constructed as described above may provide the following effects.

That is, in the vehicle seat 10 described above, when the front link 41 and the rear link 51 are respectively rotated about the stationary end side shaft portions 43 and 53 as rotation axes, the movable end side shaft portions 45 and 55 of the front link 41 and the rear link 51 can move in a vertical direction (a height direction).

A rotational range of the front link 41 is set such that the movable end side shaft portion 45 of the front link 41 can always be positioned above the rotational center connection line L (the connection line connecting the stationary end side shaft portions 43 and 53). Conversely, a rotational range of the rear link 51 is set such that the movable end side shaft portion 55 of the rear link 51 can be positioned over the range that straddles the rotational center connection line L. As a result, the rotational range (a rotational angle) of the rear link 51 may be an increased rotational range in comparison with the rotational range (a rotational angle) of the front link 41.

Further, because the movable end side shaft portions 45 and 55 of the front link 41 and the rear link 51 are connected to the cushion frame 12, only when the movable end connection line M connecting the movable end side shaft portions 45 and 55 is positioned above the stationary end side shaft portion 53 of the rear link 51, the movable end side shaft portions 45 and 55 can be rotated in the same direction in conjunction with each other. That is, the front link 41 coordinately rotates with the rear link 51 downwards or opposite to the rotational direction of the rear link 51 until the position of the movable end connection line M is switched from the lower side position to the upper side position with respect to the stationary end side shaft portion 53 of the rear link 51, so as to be placed in a stand-by condition for coordinated rotation in the same direction as the rear link 51. Thus, only the movable end side shaft portion 55 of the rear link 51 can be raised while the movable end side shaft portion 45 of the front link 41 is lowered until the position of the movable end connection line M is switched from the lower side position to the upper side position with respect to the stationary end side shaft portion 53 of the rear link 51. As a result, the rising movement length of the movable end side shaft portion 55 of the rear link 51 due to the rotation of the rear link 51 can be greater than the rising movement length of the movable end side shaft portion 45 of the front link 41 due to the rotation of the front link 41. That is, a rising length of a rear side of the seat cushion on which the buttocks of the occupant are positioned can be increased compared to a rising length of a front side of the seat cushion on which the knees of the occupant seated are positioned.

Further, the relative height difference between the movable end side shaft portion 45 of the front link 41 and the movable end side shaft portion 55 of the rear link 51 can be reduced until the stationary end side shaft portion 53 of the rear link 51 is positioned on the movable end connection line M (until the position of the movable end connection line M is switched from the lower side position to the upper side position with respect to the stationary end side shaft portion 53 of the rear link 51). That is, when the cushion frame 12 is lifted up, a rear side of the cushion frame 12 can be raised in the early stages, so as to eliminate sinking of the rear side of the seat cushion 11 (sinking of the buttocks).

Thus, in the vehicle seat 10 described above, the seat cushion 11 can be advantageously lifted up at the getting in/out time of the occupant such that a relative height of the buttocks of the occupant to the knees of the occupant in a sitting posture of the occupant at that time can be greater than the relative height in the sitting posture of the occupant during traveling.

Further, in the vehicle seat 10 described above, the rotational center connection line L of the front link 41 and the rear link 51 is set so as to be raised toward a front position in a front-back positional relation or inclined upwards and forwards. Therefore, the movable end side shaft portion 45 of the front link 41 can be effectively prevented from being lowered beyond the rotational center connection line L and prevented from being positioned below the rotational center connection line L. That is, in a case in which the movable end side shaft portion 45 of the front link 41 is moved beyond the rotational center connection line L and positioned below the rotational center connection line L, the coordinated rotation of the front link 41 and the rear link 51 is prone to instability. However, according to the vehicle seat 10 described above, the coordinated rotation of the front link 41 and the rear link 51 can be eliminated from being destabilized, so as to be stabilized.

Further, in the vehicle seat 10 described above, the hold-down member 19 disposed on at least the getting in/out side support portion 17 can function to suppress the upwardly bulged portion of the side support portion 17, so as to restrict the lift-up movement of the upper surface 175 of the side support portion 17 due to the lift-up motion of the seat cushion 11. As a result, even when the seat cushion 11 is lifted up, a height of the upper surface 175 of the side support portion 17 can be prevented from being increased to a height corresponding to the lift-up motion. Accordingly, when the occupant sits on or gets out of the vehicle seat 10 while the seat cushion 11 is lifted up, the upwardly bulged portion of the side support portion 17 can be reduced, so that the occupant can advantageously sit on or get out of the vehicle seat 10.

The vehicle seat according to the present invention is not limited to the embodiment described above and the embodiment can be changed appropriately.

For example, each of the front link 41 and the rear link 51 in the embodiment described above is formed as a substantially elongated plate-shaped straight member. However, each of the front link and the rear link of the present invention is not limited to such a substantially elongated plate-shaped straight member and may be a curved member that is configured to not interfere with various structural components.

Further, the hold-down member 19 is formed as the strap-shaped belt member. However, the hold-down member of the present invention is not limited to such a member. For example, a skin covering the side support portion can be modified in arrangement and fixture to form the hold-down member 19. That is, the skin of the side support portion can be secured to the slide rail mechanism instead of the cushion frame, so as to be function as the hold-down member of the present invention. Further, the hold-down member of the present invention is not limited to a single belt member. That is, the hold-down member may be formed as a divided component that is divided as appropriate.

### DESCRIPTION OF SYMBOLS

- 10: vehicle seat
- 11: seat cushion
- 12: cushion frame
- 121, 122: pivot connection portion
- 15: seat back
- 16: central sitting portion
- 165: upper surface of central sitting portion
- 17: getting in/out side support portion
- 175: upper surface of getting in/out side support portion
- 176: uppermost surface of getting in/out side support portion
- 18: non-getting in/out side support portion
- 185: upper surface of the non-getting in/out side support portion
- 161, 171: cushion pad
- 19: hold-down member
- 191: outer end
- 193: inner end
- 20: slide rail mechanism
- 21: leg bracket
- 25: slide rail
- 26: lower rail
- 27: upper rail
- 30: lifting mechanism
- 31: link support member
- 33: front side pivot portion
- 35: rear side pivot portion
- 41: front link
- 43: stationary end side shaft portion
- 45: movable end side shaft portion
- 51: rear link
- 53: stationary end side shaft portion
- 55: movable end side shaft portion
- 60: drive mechanism
- 61: reduction gear
- 62: driven gear
- F: vehicle floor
- L: rotational center connection line
- M: movable end connection line

## Claims

1. A vehicle seat in which a seat cushion can be lifted up when an occupant gets in and out of a vehicle,
wherein a front link (41) and a rear link (51) for lifting up the cushion frame (12) are positioned between a base member (31) disposed on a vehicle floor and a cushion frame (12) constituting a framework of the seat cushion, the front link (41) and the rear link (51) being respectively positioned in a front position and a rear position in a front-back positional relation in a relative positional relation with reference to an occupant sitting on the seat cushion,
wherein proximal end side portions of the front link (41) and the rear link (51) are respectively formed as stationary end side shaft portions (43, 53) that are rotatably connected to the base member (31), wherein distal end side portions of the front link (41) and the rear link (51) are respectively formed as movable end side shaft portions that are rotatably connected to the cushion frame (12),
wherein a distance from the stationary end side shaft portion to the movable end side shaft portion of the rear link (51) as a driven link is set so as to be shorter than a distance from the stationary end side shaft portion to the movable end side shaft portion of the front link (41) as a concurrently driven link,
wherein a range in which the movable end side shaft portion of the front link (41) can exist during rotation of the front link (41) is set so as to be contained in a range positioned above a rotational center connection line (L) connecting the stationary end side shaft portions of the front link (41) and the rear link (51),
wherein a range in which the movable end side shaft portion of the rear link (51) can exist during rotation of the rear link (51) is set so as to be positioned over a range that straddles said rotational center connection line,
wherein when the cushion frame (12) is positioned in a lowermost position, the movable end side shaft portion (45) of the front link (41) is positioned above said rotational center connection line (L) while the movable end side shaft portion (55) of the rear link (51) is positioned below said rotational center connection line,
wherein only the movable end side shaft portion (55) of the rear link (51) can be raised while the movable end side shaft portion (45) of the front link (41) is not raised until a position of a movable end connection line (M) connecting the movable end side shaft portions (45, 55) is switched from a lower side position to an upper side position with respect to the stationary end side shaft portion (53) of the rear link (51), and
wherein only when the movable end connection line is positioned above the stationary end side shaft portion (53) of the rear link (51) the movable end side shaft portions (45, 55)can be raised while rotated in the same direction in conjunction with each other.

2. The vehicle seat as defined in claim 1, wherein the rotational center connection line (L) is set so as to be raised toward the front position in the front-back positional relation or inclined upwards and forwards.

3. The vehicle seat as defined in claim 1 or claim 2, wherein the seat cushion has bank-shaped side support portions (17, 18) that are positioned on widthwise both sides of the seat cushion and that are respectively bulged upwards beyond a central portion (16) of the seat cushion, and
wherein at least a getting in/out side support portion (17) in the side support portions that are positioned on the widthwise both sides of the seat cushion has a hold-down member (19), the hold-down member being configured to suppress an upwardly bulged portion of the getting in/out side support portion (17) as the seat cushion is lifted up, so as to restrict lift-up movement of an upper surface of the getting in/out side support portion (17) due to lift-up motion of the seat cushion.

## Patentansprüche

1. Ein Fahrzeugsitz, dessen Sitzpolster anhebbar ist, wenn ein Fahrzeuginsasse ein- und aussteigt,
wobei zwischen einem am Fahrzeugboden angeordneten Grundkörper (31) und einem Polsterrahmen (12), der einen Rahmen des Sitzes bildet, ein vorderes Glied (41) und ein hinteres Glied (51) zum Anheben des Polsterrahmens (12) angeordnet sind, wobei das vordere Glied (41) und das hintere Glied (51) jeweils in einer vorderen Position und einer hinteren Position vor- und hintereinander mit Bezug auf einen auf dem Sitzpolster sitzenden Insassen angeordnet ist,
wobei proximale Endabschnitte des vorderen Glieds (41) und des hinteren Glieds (51) jeweils als unbewegliche endseitige Schaftabschnitte (43, 53) ausgebildet sind, die drehbar mit dem Basiselement (31) verbunden sind,
wobei distale Endabschnitte des vorderen Glieds (41) und des hinteren Glieds (51) jeweils als bewegliche endseitige Schaftabschnitte ausgebildet sind, die drehbar mit dem Polsterrahmen (12) verbunden sind,
wobei ein Abstand vom unbeweglichen endseitigen Schaftabschnitt zum bewegbaren endseitigen Schaftabschnitt des hinteren Glieds (51) als angetriebenes Glied so eingestellt ist, dass er kürzer als ein Abstand vom unbeweglichen endseitigen Schaftabschnitt zum beweglichen endseitigen Schaftabschnitt des vorderen Glieds (41) als gleichzeitig angetriebenes Glied ist,
wobei ein Bereich, in dem sich der bewegliche endseitige Schaftabschnitt des vorderen Glieds (41) während der Drehung des vorderen Glieds (41) befinden kann, so eingestellt ist, dass er in einem Bereich angeordnet ist, der oberhalb einer die Drehmittelpunkte verbindenden Linie (L) angeordnet ist, welche die unbeweglichen endseitigen Schaftabschnitte des vorderen Glieds (41) und des hinteren Glieds (51) verbindet,
wobei ein Bereich, in dem sich der bewegliche endseitige Schaftabschnitt des hinteren Glieds (51) während der Drehung des hinteren Glieds (51) befinden kann, so eingestellt ist, dass er über einem Bereich positioniert ist, der die die Drehmittelpunkte verbindende Linie (L) überspannt,
wobei, wenn der Polsterrahmen (12) in einer untersten Position angeordnet ist, der bewegliche endseitige Schaftabschnitt (45) des vorderen Glieds (41) oberhalb der die Drehmittelpunkte verbindenden Linie (L) positioniert ist, während der bewegliche endseitige Schaftabschnitt (55) des hinteren Glieds (51) unterhalb der die Drehmittelpunkte verbindenden Linie angeordnet ist,
wobei nur der bewegliche endseitige Schaftabschnitt (55) des hinteren Glieds (51) anhebbar ist, während der bewegliche endseitige Schaftabschnitt (45) des vorderen Glieds (41) nicht angehoben wird, bis eine Position einer Verbindungslinie (M) zwischen beweglichen Enden, die die beweglichen endseitigen Schaftabschnitte (45, 55) verbindet, aus einer unterseitigen Position in eine oberseitigen Position relativ zum unbeweglichen endseitigen Schaftabschnitt (53) des hinteren Glieds (51) gebracht ist, und
wobei nur dann, wenn die Verbindungslinie zwischen beweglichen Enden oberhalb des unbeweglichen endseitigen Schaftabschnitts (53) des hinteren Glieds (51) positioniert ist, die beweglichen endseitigen Schaftabschnitte (45, 55) anhebbar sind, während sie miteinander verbunden in derselben Richtung gedreht werden.

2. Fahrzeugsitz nach Anspruch 1, wobei die die Drehmittelpunkte verbindende Linie (L) so angeordnet ist, dass sie in der Positionsbeziehung von vorn nach hinten hin zur vorderen Position angehoben oder nach oben und nach vorn geneigt ist.

3. Fahrzeugsitz nach Anspruch 1 oder 2, wobei das Sitzpolster wangenartig geformte Seitenstützabschnitte (17, 18) aufweist, die in Breitenrichtung beidseitig des Sitzpolsters angeordnet sind und die jeweils über einen mittleren Abschnitt (16) des Sitzpolsters nach oben hinausstehen, und
wobei mindestens ein Einstiegs-/Ausstiegsseitenstützabschnitt (17) in den Seitenstützabschnitten, die in Breitenrichtung beidseitig des Sitzpolsters angeordnet sind, ein Niederhalteelement (19) umfasst, wobei das Niederhalteelement dazu aufgebaut ist, dass es einen nach oben gewölbten Abschnitt des Einstiegs-/Ausstiegsseitenstützabschnitts (17) niederdrückt, wenn das Sitzpolster angehoben wird, um so eine Hebebewegung einer Oberseite des Einstiegs- / Ausstiegsseitenstützabschnitts (17) aufgrund der Hebebewegung des Sitzpolsters einzuschränken.

## Revendications

1. Siège de véhicule dans lequel un coussin de siège peut être soulevé lorsqu'un occupant entre et sort d'un véhicule,
dans lequel une liaison avant (41) et une liaison arrière (51) pour soulever le bâti de coussin (12) sont positionnées entre un élément de base (31) disposé sur un plancher de véhicule et un bâti de coussin (12) constituant un châssis du coussin de siège, la liaison avant (41) et la liaison arrière (51) étant respectivement positionnées dans une position avant et une position arrière dans une relation positionnelle avant - arrière dans une relation positionnelle relative en référence à un occupant assis sur le coussin de siège,
dans lequel les parties du côté de l'extrémité proximale de la liaison avant (41) et de la liaison arrière (51) sont respectivement formées comme des parties d'arbre du côté de l'extrémité fixe (43, 53) qui sont raccordées, en rotation, à l'élément de base (31),
dans lequel les parties du côté de l'extrémité distale de la liaison avant (41) et de la liaison arrière (51) sont respectivement formées comme des parties d'arbre du côté de l'extrémité mobile qui sont raccordées, en rotation, au bâti de coussin (12),
dans lequel une distance allant de la partie d'arbre du côté de l'extrémité fixe à la partie d'arbre du côté de l'extrémité mobile de la liaison arrière (51) en tant que liaison entraînée, est déterminée pour être plus courte qu'une distance allant de la partie d'arbre du côté de l'extrémité fixe à la partie d'arbre du côté de l'extrémité mobile de la liaison avant (41) en tant que liaison entraînée simultanément,
dans lequel une plage dans laquelle la partie d'arbre du côté de l'extrémité mobile de la liaison avant (41) peut exister pendant la rotation de la liaison avant (41), est déterminée pour être contenue dans une plage positionnée au-dessus d'une ligne de raccordement de centre de rotation (L) raccordant les parties d'arbre du côté de l'extrémité fixe de la liaison avant (41) et de la liaison arrière (51),
dans lequel une plage dans laquelle la partie d'arbre du côté de l'extrémité mobile de la liaison arrière (51) peut exister pendant la rotation de la liaison arrière (51), est déterminée pour être positionnée sur une plage qui est à cheval sur ladite ligne de raccordement de centre de rotation,
dans lequel lorsque le bâti de coussin (12) est positionné dans la position la plus basse, la partie d'arbre du côté de l'extrémité mobile (45) de la liaison avant (41) est positionnée au-dessus de ladite ligne de raccordement de centre de rotation (L) alors que la partie d'arbre du côté de l'extrémité mobile (55) de la liaison arrière (51) est positionnée au-dessous de ladite ligne de raccordement de centre de rotation,
dans lequel seule la partie d'arbre du côté de l'extrémité mobile (55) de la liaison arrière (51) peut être levée, alors que la partie d'arbre du côté de l'extrémité mobile (45) de la liaison avant (41) n'est pas levée jusqu'à ce qu'une position d'une ligne de raccordement d'extrémité mobile (M) raccordant les parties d'arbre du côté de l'extrémité mobile (45, 55) passe d'une position latérale inférieure à une position latérale supérieure par rapport à la partie d'arbre du côté de l'extrémité fixe (53) de la liaison arrière (51), et
dans lequel uniquement lorsque la ligne de raccordement d'extrémité mobile est positionnée au-dessus de la partie d'arbre du côté de l'extrémité fixe (53) de la liaison arrière (51), les parties d'arbre du côté de l'extrémité mobile (45, 55) peuvent être levées tout en tournant dans la même direction les unes conjointement aux autres.

2. Siège de véhicule selon la revendication 1, dans lequel la ligne de raccordement de centre de rotation (L) est déterminée pour être levée vers la position avant dans la relation positionnelle avant - arrière ou inclinée vers le haut et vers l'avant.

3. Siège de véhicule selon la revendication 1 ou la revendication 2, dans lequel le coussin de siège a des parties de support latérales en forme de banc (17, 18) qui sont positionnées dans le sens de la largeur des deux côtés du coussin de siège et qui sont respectivement renflées vers le haut au-delà d'une partie centrale (16) du coussin de siège, et
dans lequel au moins une partie de support latérale d'entrée / sortie (17) dans les parties de support latérales qui sont positionnées dans le sens de la largeur des deux côtés du coussin de siège, a un élément de maintien (19), l'élément de maintien étant configuré pour supprimer une partie renflée vers le haut de la partie de support latérale d'entrée / sortie (17) lorsque le coussin de siège est soulevé, afin de limiter le mouvement de soulèvement d'une surface supérieure de la partie de support latérale d'entrée / sortie (17) dû au mouvement de soulèvement du coussin de siège.
